# EUROPEAN PATENT SPECIFICATION

(11) **EP 2 530 653 B1**
(45) Date of publication and mention of the grant of the patent: **11.10.2017**
(21) Application number: 12180615.2
(22) Date of filing: 20.10.2006
(51) Int. Cl.: G07B 15/00, G07B 15/06

(54) **Automatic payment and/or registration of traffic related fees**
Automatische Zahlung bzw. Registrierung von Gebühren im Zusammenhang mit Verkehr
Paiement automatique et/ou d'enregistrement de taxes relatives au trafic

(30) Priority: 20.10.2005 US 728308 P
(43) Date of publication of application: 05.12.2012
(62) Divisional of application: 06791477.0
(73) Proprietor: Cartime Technologies A/S, 2920 Charlottenlund (DK)
(72) Inventor: Haaning Høj, Ib, 2000 Frederiksberg (DK)
(74) Representative: Inspicos P/S

(56) References cited:
- US-A- 5 970 481
- US-A1- 2004 153 401
- US-B1- 6 680 694

## Description

### FIELD OF THE INVENTION

The present invention relates to a system, a method and a mobile unit/mobile device for accurately determining the position of a portable or movable unit, such as for example a vehicle. The present invention further relates to automatic payment or registration of traffic-related fees or taxes, such as for example road taxes.

### BACKGROUND OF THE INVENTION

US patent application 2002/0143611 discloses a system and a method for performing vehicle payment transactions. The system of US 2002/0143611 includes a vehicle with a location determining component and a communication component, and a server with a communication component, a vehicle location identifying component, and a transaction completing component. The location determining component determines the location of the vehicle, and the vehicle communication component sends the determined vehicle location information to the server. The server communication component receives the determined vehicle location information from the vehicle. The vehicle location identifying component determines if the sent vehicle location locates the vehicle in a pay location. If the vehicle location identifying component determines that the vehicle is located in a pay location, the transaction completing component completes a payment transaction.

The location determining component of US 2002/0143611 is disclosed as being a stand-alone GPS receiver. For example, in paragraphs 15, 16 and 20 it is stated that the location of the vehicle is determined via GPS coordinates.

It is a drawback of the system disclosed in US 2002/0143611 that the determining of the vehicles position only leads to an accuracy of around 3-20 meters because only uncorrected GPS coordinates are used. For location determination in relation to for example automatic payment of vehicle parking fees an accuracy of 3-20 meters is insufficient in that at borderlines between two neighbouring parking zones having different parking fee levels it becomes impossible to determine in which of such neighbouring zones the vehicle is actually located. Also, it becomes very difficult to determine whether a vehicle is parked inside or outside a parking area in case the vehicle is parked in an outermost parking booth of the parking area. As a consequence, if the position of the vehicle cannot be correctly determined an associated parking fee cannot be correctly determined and thereby correctly paid.

Thus, there is a potential risk that the actual location of a vehicle is wrongly determined when only uncorrected GPS coordinates are applied.

In order to be able to determine the position of a vehicle with sufficient accuracy the position of the vehicle must be determinable with an accuracy of around half of the vehicle width. This implies that the position of a vehicle must be determinable with a static horizontal accuracy approaching half of the width of a standard vehicle.

Ordinary GPS is based on making observations of the GPS signals at the (client) receiver and performing a number of mathematical operations on the data through digital signal processing to achieve a position estimate. It is known and recognized by those familiar with GPS and satellite navigation in general, that the attainable accuracy of the position estimates achievable through stand alone GPS receivers (or any other stand alone satellite navigation receiver) is limited, and that several methods exist to introduce measures to obtain a better accuracy than that provided by a GPS receiver alone.

The accuracy of the position estimate that is attainable in a basic stand alone GPS receiver is largely limited by the errors that are imposed on the GPS signals. It is also recognized that the level of complexity and the sophistication of the digital signal processing employed in the receiver influences the attainable accuracy to a great extent, ie. an advanced, expensive receiver is expected to perform better that a simple, cheap receiver given the same operating conditions. It is well established that a number of methods can be employed to obtain position estimates with better accuracy, such as DGPS (Differential GPS) and SBAS (Satellite Based Augmentation Systems).

A system and method for automatic charging for vehicle parking is suggested in EP 0 952 557 A. In EP 0 952 557 A DGPS is presented as the means for obtaining sufficient accuracy. In addition, document US 5970481 A discloses a system and method for automatic payment for road taxes, where the vehicle location determination can be carried out either by the vehicle mobile unit or remotely by the base unit. The principle of DGPS is to use differences of GPS observables rather than the absolute observations themselves. The differences are obtained by subtracting differential corrections from the observations made at the client receiver. The differential corrections are made at a differential reference station (also called a DGPS beacon) and the corrections are disseminated to the client receiver(s) typically through wireless communications, broadcasted as a local radio signal (typically at a long wave frequency around 300 kHz). A side effect of using differences of GPS observations to compute the client receiver position is that instead of the absolute position, the position of the receiver relative to the reference station (i.e. a so-called baseline vector between the reference station and the client receiver) is found.

The underlying idea behind DGPS is that the error that limits the attainable accuracy is - to some degree - present in the GPS signals at both the reference station and the client receiver (mathematically, the errors are correlated). This means that when differences are formed, the errors that are common to both the reference station and the client receiver is cancelled out by subtraction. DGPS therefore relies on the assumption that the errors at the reference station and the client receiver are the same.

This assumption of course is only entirely true when the client receiver is located at the same geographical location as the reference station. The errors are highly correlated when the receivers are in close proximity, and in this case the application of differential corrections can result in a dramatically improved positioning accuracy. However this improvement deteriorates as the geographical separation between the reference station and the client receiver is increased (and the spatial correlation decreases) and when the distance between the two exceeds a few tens of kilometres the beneficial effect is significantly reduced.

The predominant errors that are cancelled this way are those imposed by the ionosphere in that the satellite signals are distorted in a somewhat systematic manner when the signals pass through the ionosphere and the troposphere - the first of the two being the most significant. Both error sources can vary locally over short time spans mainly due to ionospheric scintillations and tropospheric variations, such as air humidity, so the commonality of GPS errors that can be cancelled with DGPS can vary greatly when the distance between the reference station and the client receiver is increased.

Thus, to obtain efficient differential corrections, a network of reference stations is required to provide local coverage. This in turn means that the reference stations need to be considered as part of the local infrastructure for any system that depends on DGPS for proper operation. The higher the requirement for positioning accuracy, the finer the grid of reference stations needs to be.

Thus, this EP 0 952 557 A suggests position correction by use of DGPS the available position accuracy is strongly dependent on the denseness of the reference stations. Also, it is a disadvantage of DGPS that the available position accuracy may vary from one geographical area to another geographical area.

In contrast to DGPS, the idea behind SBAS is to employ a number of satellite monitoring stations which compute augmentation data that can be disseminated through satellites rather than local reference stations to reach users in a much wider region. One of the main purposes of SBAS is to obviate the need for a network of local reference stations. Thus, using SBAS will mean independence from local infrastructure.

The principle of SBAS is to use a number of strategically located RIMS stations (Ranging and Integrity Monitor Stations) to observe the GPS constellation. The RIMS receive the GPS signals and compare the position estimates that can be determined from the GPS observables with the known locations of the RIMS. This is used to form corrections that are sent from the RIMS to a Central Processing Centre. In the EGNOS system, the data is collected in the Mission Control Centre where it is used to compute (1) Long term errors of the satellite orbits, (2) Short term and long term errors of the satellite clocks, (3) Ionospheric correction grids and (4) Integrity information. These are combined to form the EGNOS augmentation data set.

With regards to increasing positioning accuracy, the ionospheric correction grids are the most important feature. The continuous stream of observations by the RIMS network is used to form a 'map' of the TEC (Total Electron Content) in the ionosphere for the area covered by the RIMS stations (which for EGNOS is all of Europe). TEC is the number of electrons in a column of one meter-squared cross-section along a signal path through the ionosphere, and this accurately describes the error that the ionosphere imposes on the GPS signal.

The TEC maps are sent to the geostationary SBAS satellites which retransmit them to provide the client receivers with the information they need to perform the correction of the ionospheric effects. Using the TEC map the client GPS receivers can calculate the 'pierce point', i.e. the point where the GPS satellite signal penetrates the ionosphere, and delay of the signal of each satellite used for position calculation and then correct the data for higher accuracy in the position determination.

In SBAS the monitor stations do not provide single isolated corrections, but data from all stations together are combined to calculate a correction map for a wide area. Every single receiver then corrects its own position itself by use of this data. In that way, the accuracy that can be achieved is even better than with DGPS, except for cases where the client receiver is very close to a reference station, where DGPS may outperform SBAS.

In conclusion, the key to SBAS is that the corrections that are applied are computed based on the client receiver position and that this is independent of where the monitor stations are located. This provides a wide coverage independent of local infrastructure. A TEC map is not provided in conventional DGPS based on differential reference stations, so in DGPS the reduction of the ionospheric errors depend solely on closeness to a reference station. Unlike DGPS, SBAS can be expected to perform consistently throughout a wide area independent of reference stations.

Due to the radio frequencies used in DGPS and SBAS systems, the practical implementation of DGPS and SBAS differs in a fundamental way. DGPS uses long wave radio transmissions around 300 kHz, which is equivalent to wavelengths of around 1 km, whereas GPS uses the UHF radio frequency 1575.42 MHz for the GPS L1 carrier, which is equivalent to a wavelength of only 19.029 cm. This implies that it is not practically feasible to receive the DGPS signal with a normal GPS patch antenna since the geometry and physical size of the GPS antenna is determined from a certain fraction of the 19.029 cm wavelength which again is determined by the dielectric characteristics of the ceramic materials used in the antenna.

The GPS frequency allows the use of cheap, compact low-profile antennas such as ceramic microstrip patch antennas, whereas the DGPS signal with its wavelength being approximately 5000 times longer requires a significantly different antenna technology, namely a much larger, more expensive and bulky whip or ferrite core coil based antenna.

SBAS signals on the other hand are broadcasted on the same carrier frequency as the GPS signals, thus allowing the same GPS antenna and radio front-end to be used for SBAS reception. Thus, using DPGS will result in a much more heterogeneous receiver hardware architecture that is more complex and more expensive than that of SBAS based receivers.

It may be seen as an object of the present invention to provide a cost efficient system and a method for determining the position of a movable unit, such as a vehicle, with a static horizontal accuracy approaching half of the width of a standard vehicle.

It is a further object of the present invention to provide a system and a method which is an essentially self contained system and method being essentially independent of local infrastructures. The only local infrastructure required is cellular network coverage which is readily available where operation of the system is desired.

It is a still further object of the present invention to provide a system and a method which in combination with the determination of the position of for example a vehicle also offers automatic payment or registration of position traffic-related fees, such as road taxes in relation to road pricing.

It is a still further object of the present invention to provide a system and a method which is easy to maintain and update when required.

### SUMMARY OF THE INVENTION

The objects of the present invention indicated above are achieved by the system and method for automatic payment of road taxes for vehicles of, respectively, claims 1 and 8. In its most general aspect the present invention relates to a system or a method for automatic payment or automatic registration of traffic related fees for vehicles, such as road taxes in relation to road pricing. In order to pay or register traffic related fees in an acceptable manner the precise position of the vehicle must be determinable. Also, for obtaining the relevant approvals from various traffic or legal authorities for such system and method the position of the vehicle must be determinable with an accuracy approaching half of the width of a standard vehicle.

In the above context automatic payment should be taken to mean a financial transaction performed immediately after a given event has occurred. For example, a financial transaction in form of payment of a parking fee may immediately follow the removing of a vehicle from a parking lot. The amount to be paid may depend on the position of the parking lot and the time the vehicle has been parked at the specific location. The payment may be performed by drawing the amount from the vehicle owners bank account.

By automatic registration is meant that the above-mentioned financial transaction may not immediately follow a given event. Payment of for example parking fees may be accumulated over a period of time, for example a month, as it is known from credit card arrangements. Thus, the accumulated parking fees are billed once a month, typically at the end of a month, and the total sum to be paid is drawn from the owners bank account.

Similarly, road taxes may also be automatically paid or automatic accumulated in a register and subsequently billed for automatic payment at the end of each month.

In a first aspect the present invention relates to a system for automatic payment of road taxes for vehicles in accordance with claim 1.

The satellite-based navigation system receiver may comprise a GPS receiver or a GALILEO receiver. The communication means of each of the plurality of mobile units may be adapted to communicate via a cellular network, such as GSM, GPRS, EDGE, iDEN, D-AMPS; PDC, W-CDMA, CDMA2000 or TD-SCDMA.

The processor means of the plurality of mobile units may form part of processor means of the communication means of the mobile units. In this way a separate processor is saved.

The communication means of the base unit may be adapted to communicate with the plurality of mobile units via an Internet Service Provider.

The base unit may comprise one or more base units optionally positioned at different physical locations. In fact, the base unit may preferably be implemented as a redundant unit comprising a number of essentially identical base units optionally positioned at different physical locations. By implementing a redundant system the risk of system brake down or failure is significantly reduced. The base unit may comprise a plurality of data bases, wherein a first data base comprises information relating to road sections where road taxes are to be paid, and wherein a second data base comprises position correction signals to be applied to position observables generated by mobile units, and wherein a third data base comprises user account related information. The base unit may be operatively connected to a plurality of external service providers, such as a payment service provider, a redundant service providing position correction signals etc.

In a second aspect, the present invention relates to a method for automatic payment of road taxes for vehicles in accordance with claim 8.

The step of calculating a corrected position of the vehicle may involve applying SBAS corrections to the first position of the vehicle, said first position of the vehicle being represented by at least one set of GPS observables or GPS coordinates.

In a first embodiment, the step of calculating a corrected position of the vehicle involves applying EGNOS corrections to the first position of the vehicle, said first position of the vehicle being represented by at least one set of GPS observables or GPS coordinates. At least two ways exist of using EGNOS augmentation data to achieve a better GPS position estimate. The EGNOS augmentation data can be used to form a correction to an already computed GPS position estimate, or the EGNOS augmentation data can be applied directly to the GPS observations/observables to correct these prior to computation of the GPS position estimate. The latter of the two is advantageous since it provides a better overall augmentation, resulting in a more efficient correction which leads to a more accurate GPS position estimate.

In a second embodiment, the step of calculating a corrected position of the vehicle involves applying WAAS corrections to the first position of the vehicle, said first position of the vehicle being represented by at least one set of GPS observables or GPS coordinates.

Finally, in a third embodiment, the step of calculating a corrected position of the vehicle involves applying MSAS corrections to the first position of the vehicle, said first position of the vehicle being represented by at least one set of GPS observables or GPS coordinates.

The method may further comprise the step of completing a financial transaction, said financial transaction comprising the step of drawing an amount corresponding to a calculated road tax from an account of an individual registered as the owner of the mobile unit, and deposit this amount on an account of the parking area proprietor.

Alternatively, the method may further comprise the step of completing a financial transaction, said financial transaction comprising the step of registering an amount corresponding to a calculated road tax, and storing this registering amount to enable a later deposit of an amount corresponding to accumulated registered amounts, said deposit being to an account of the road tax proprietor. According to this embodiment, an accumulated amount corresponding to accumulated road taxes may be drawn, for example once a month, from an account of an individual registered as the owner of the mobile unit, and deposited on an account of the road tax proprietor.

Alternatively, the method may further comprise the step of completing a financial transaction, said financial transaction comprising the step of drawing an amount corresponding to a calculated road tax from a prepaid amount paid by an individual registered as the owner of the mobile unit.

### BRIEF DESCRIPTION OF THE INVENTION

The present invention will now be explained in greater details with reference to the accompanying figures, within
Fig. 1 shows a high level system schematic overview illustration of the system according to the present invention,
Fig. 2 shows a parking lot with vehicle,
Fig. 3 shows an overall block diagram of the system according to the present invention,
Fig. 4 illustrates the communication flow during a traffic related event,
Fig. 5 illustrates the decision flow during a traffic related event,
Fig. 6 shows a parking lot presented in compact, simplified form by a circular approximation.

While the invention is susceptible to various modifications and alternative forms, specific embodiments have been shown by way of example in the drawings and will be described in detail herein. It should be understood, however, that the invention is not intended to be limited to the particular forms disclosed. Rather, the invention is to cover all modifications, equivalents, and alternatives falling within the spirit and scope of the invention as defined by the appended claims.

### DETAILED DESCRIPTION OF THE INVENTION

As already mentioned the present invention relates, in its most general aspect, to a system or a method for automatic payment or automatic registration of traffic related fees for vehicles. Such traffic related fees may be road taxes in relation to road pricing. In order to pay or register traffic related fees in an acceptable manner the precise position of the vehicle must be determinable. Also, for obtaining the relevant approvals from various traffic or legal authorities for such system and method the position of the vehicle must be determinable with an accuracy better than approximately half of the width of a typical vehicle. The present invention aims at determining the horizontal position of a vehicle with an accuracy around 0.8 meters.

In order to achieve the above-mentioned accuracy, position information from various systems, such as GPS, GALILEO and EGNOS, are required. For example, GPS is applied to determine the position of the vehicle with an accuracy in the range 3-20 metres. Such accuracy is insufficient and a correction value provided by EGNOS is applied to increase the accuracy to around 0.8 metres.

Even though the description also relates to payment of parking fees the overall principles of the systems, methods and mobile units according to the present invention also apply to automatic payment of other types of traffic related fees, such as road taxes, bridge fees etc.. Thus, by applying the over all principles of the present invention it may be determined when a vehicle enters a road section, for example a high way, a bridge etc., where road taxes are to be paid.

In the following, the system and method according to the present invention will be described with reference to automatic payment of parking fees, but as previously mentioned the scenario could as well be related to automatic payment of any traffic related fee, such as for example road taxes.

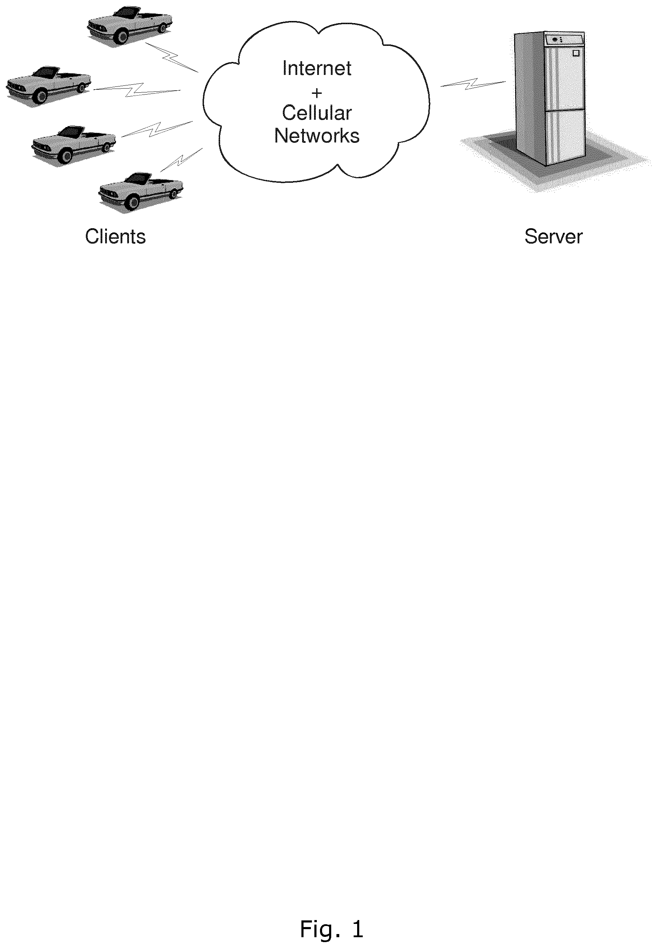

It is envisioned that the system must be able to support a large number of concurrent users, eventually numbered in the millions, so it is of vital importance that the cost price of each end-user product is cheap to manufacture. It is of equal importance that the daily system operation and maintenance (such as parking area updates) can take place without access to the end-users products due to their sheer volume. This dictates the need for a client-server system architecture and that the client is kept as simple as possible. Such system is depicted in Fig. 1 where a plurality of clients, here vehicles, communicate with a central server.

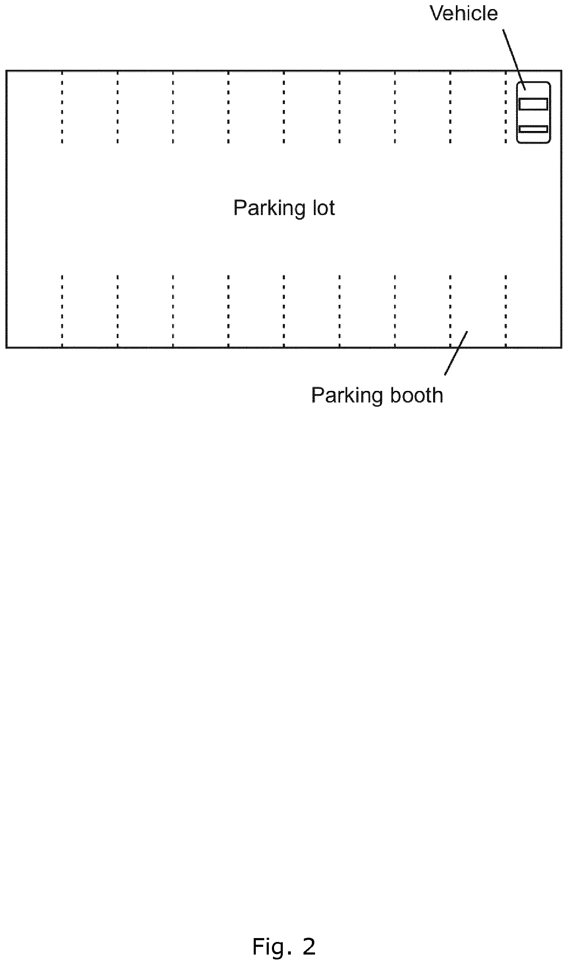

A simple parking lot with a vehicle parked in a parking booth is depicted in Fig. 2. In order to determine in which parking booth the vehicle is parked, or to determine if the vehicle is parked in an outermost parking booth, as depicted in Fig. 2, or outside the parking lot, the position of the vehicle needs to be determinable with an accuracy approaching half the width of the vehicle. If such accuracy is achieved it may be determined in which of a plurality of neighbouring and abutting parking booths the vehicle is positioned.

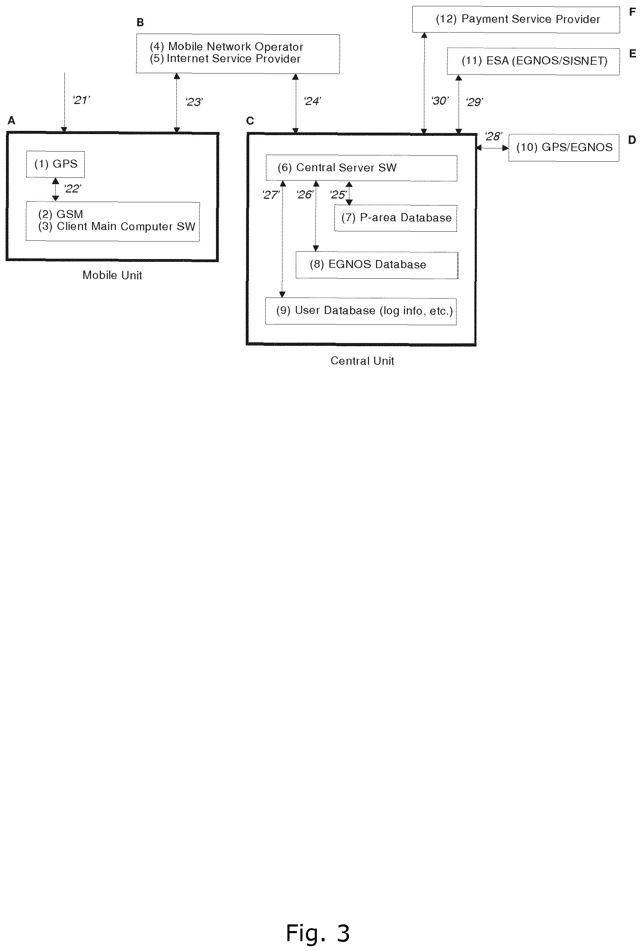

Referring now to Fig. 3 each customer purchases a mobile unit (**A**) - a client - as well as a service that provides automated access to a central unit (**C**) - the server. Each customer is registered in an account system on the server where he has a subscription associated to his identity and the identity of his product. Each client is given a unique identification number during manufacturing.

The system comprises a single central unit, a large number of mobile units and a number of external service providers (**B**, **E** and **F**). Also a GPS (Global Positioning System) receiver that is EGNOS (European Geostationary Navigation Overlay Service) compliant is employed (**D**).

The block diagram of Fig. 3 comprises the following main blocks:
**A** Mobile unit: An end-user module with a unique id code located in the customers vehicle. The mobile unit is made location aware via GPS.
**B** MNO (Mobile Network Operator) and ISP (Internet Service Provider): The infrastructure necessary for the mobile units to communicate with "the rest of the world". The mobile units establish wireless connections to the cellular phone networks of the MNOs and the MNOs pass communication on to an ISP. The ISP routes the information to/from internet which in effect enables the mobile units to communicate with the server through internet.
**C** Central unit: The server handles the communication to all the mobile units. The server contains all information about parking areas and fees associated with parking so this information can be easily updated without access to all the clients. The server also handles all transactions. The accessibility of the server is vital for the proposed system to work so it is of utmost importance that this is implemented in a robust way and with a number of redundant physical units to maximize system robustness and uptime.
**D** An EGNOS compliant GPS receiver: One of the means of obtaining EGNOS corrections which will be needed to ensure proper operation of the system.
**E** SISNET: An internet based service that ESA (European Space Agency) is providing. This is one of the means of obtaining the EGNOS corrections needed to ensure proper operation of the system.
**F** PSP (Payment Service Provider): A service - such as the Danish PBS (Pengeinstitutternes Betalingsservice) - that enables the operator to perform financial transactions to all the P-area owners.

If desired, it is possible to encrypt the data traffic between the clients and the server. Well known methods for applying cryptography exists, and any appropriate method that is convenient could be employed. For instance, cryptographic protocols such as SSL (Secure Sockets Layer) and its successor, TLS (Transport Layer Security) are well known methods to provide secure communications on the internet for a number of things such as web browsing, e-mail, and other data transfers. SSL and TLS run on layers beneath application protocols (such as HTTP, FTP, SMTP and NNTP) and above the TCP or UDP transport protocol, which form part of the TCP/IP protocol suite. They can add security to any protocol that uses reliable connections (such as TCP), and has found widespread use with HTTP to form HTTPS. Current implementations of SSL/TLS are based on methods such as RSA (Rivest, Shamir and Adleman), Triple DES (Triple Data Encryption Standard) and AES (Advanced Encryption Standard), so they are generally considered to be very secure.

The general principle of operation of the system depicted in Fig. 3 is as follows:
The mobile unit uses GPS to detect when parking is taking place. The mobile unit main computer software does this simply by monitoring the continuous stream of position estimates from the GPS module and detecting when a sufficient amount of GPS data suggest that the vehicle is no longer moving but parked. Other means of confirming that the vehicle is parked (such as ignition key state, accelerometer measurements, etc.) may be incorporated as well. The mobile unit uses the GSM/GPRS modem to connect and signal this to the server.

The server responds by applying the latest set of EGNOS corrections to the GPS position given by the mobile unit to obtain a corrected position estimate which has a higher degree of accuracy. This corrected position estimate is compared to the location and boundaries of the registered parking areas that are associated with parking fees and determines if the parked vehicle is located inside a payment zone.

If this is the case the server makes a log entry for the given mobile unit identification code indicating that a parking event has commenced. If the user has an account and a valid subscription to the service, a transaction is prepared and the server signals back to the mobile unit that the parking event is registered and it is taking place within a payment area. This is also indicated on the externally visible part of the mobile unit so that any parking attendant at the parking area can verify that the vehicle is parked legally and that payment will occur.

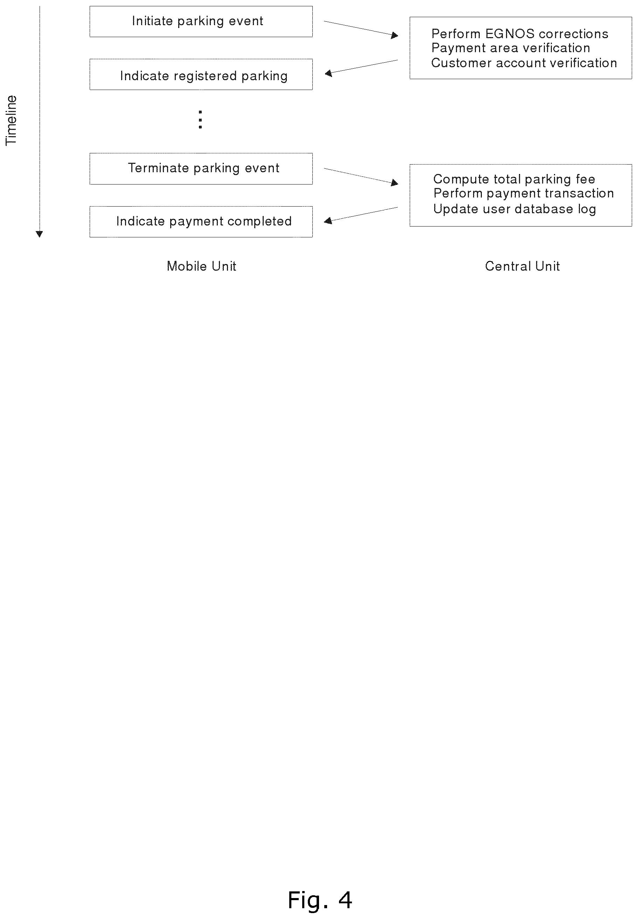

When the vehicle is moved the mobile unit detects this and the server is contacted again. The server computes the duration of the parking event, compares this to the potentially time dependant parking fee table for the given parking area and finally computes the total parking fee. The server completes the payment by performing the transaction which transfers the fee from the users account to the owner of the parking area. The server also signals to the mobile unit that payment for the parking has indeed taken place and displays to the user how much was paid. The overall communication flow during a parking event is illustrated in Fig. 4.

The system depicted in Fig. 3 comprises a number sub-modules - the functionality of these sub-modules will be explained in the following:
1 A GPS receiver. Must provide accurate position estimates even in urban areas.
2 A GSM (Global System for Mobile Communications) modem with GPRS (General Packet Radio Service) transmit/receive facilities for data communication.
3 An embedded computer with system software which governs decision-making in the mobile unit. Rather than implementing this control software in a separate microprocessor the required software is implemented directly in the GSM modem which typically has some free microprocessor resources for application programming.
4 A number of mobile network operators who's aggregated GSM, 3G or EDGE network covers the area within which service coverage is wanted.
5 The operators typically also function as internet service providers so they will be able to perform the bridging of data between the mobile units on the GSM network and internet.
6 The central system software which governs and coordinates all the operations at the server side of the communication that takes place between the central unit and the clients. The system software contains all required functions to compute parking fees based on parking location and duration information, it handles all the information exchange with the payment service provider and it performs the EGNOS corrections on mobile unit GPS position estimates to ensure that sufficiently accurate positions are used. The system software makes use of a number of databases for these purposes.
7 A database which contains information about the physical location and boundaries of the parking areas that are covered by the provided service. The database also contains parking fees, information about when the fees are applicable as well as information about to whom payment transactions should be made to for the different parking areas.
8 A database that contains all the navigation data messages disseminated in EGNOS.
9 A database with customer specific information such as account data associated with each mobile units unique identification code, logged activities and other statistics.
10 A GPS/EGNOS receiver used to monitor the geostationary EGNOS satellites. The receiver is equipped with a high gain antenna and this antenna is to be located at a high elevation point compared to the physical surroundings to ensure good reception conditions. By continuously monitoring the EGNOS satellites, the EGNOS message database (point "8") can be held constantly updated with the most recent set of correction data.
11 An internet based service called SISNET (Signal-In-Space through the interNET) provided by ESA. SISNET provides users access to the same EGNOS messages that are disseminated through the geostationary satellites. This ensures a redundant supply of EGNOS data.
12 An internet based service, such as the one provided by the Danish PBS, which enables one to perform financial transactions to the owner of the covered parking areas.

In Fig. 3 a plurality of communication channels between the various modules and sub-modules are depicted. The following is a description of the these communication channels:
*'21'* A wireless transmission from the satellites in GPS and the GPS receiver in block (**A**). Protocol: Specified in the USCG (U.S. Coast Guard) Navigation Center "Interface Control Document (ICD-GPS-200c)" p.t. version IRN-200C-004.
*'22'* A serial RS-232 connection between the GPS module and the main computer software. Protocol: "NMEA-0183" for GPS specific data.
*'23'* A wireless connection between the mobile units and the mobile network operators. Protocol: TCP/IP formatted data sent via GPRS packets over GSM.
*'24'* A flat rate commercial DSL (Digital Subscriber Line) connection (or equivalent) between the internet service provider and the central server. Protocol: TCP/IP formatted data sent via internet.
*'25'* A TCP (Transmission Control Protocol) port connection between the server main application software and a database (for parking area information), such as a MySQL database (or other suitable database). Protocol: Proprietary commands defined by operator that adheres to the SQL standard.
*'26'* A TCP port connection between the server main application software and a database (for EGNOS data messages), such as a MySQL database (or other suitable database). Protocol: Proprietary commands defined by operator that adheres to the SQL standard.
*'27'* A TCP port connection between the server main application software and a database (for customer specific information), such as a PostgreSQL database (or other suitable database). Protocol: Proprietary commands defined by operator that adheres to the SQL standard.
*'28'* A serial RS-232 connection between the GPS/EGNOS receiver and the central server. Protocol: "NMEA-0183" for GPS specific data.
*'29'* A flat rate commercial DSL connection (or equivalent) between the central server and the ESA SISNET Data Server. Protocol: TCP/IP formatted data that adheres to the SISNET standard specified by ESA.
*'30'* A flat rate commercial DSL connection (or equivalent) between the central server and the payment service provider(s) used to carry out the financial transactions. Protocol: TCP/IP formatted data that adheres to the standard specified by the payment service provider(s) used.

The DSL connections *'24', '29'* and *'30'* may very well be a shared connection to the local ISP. Furthermore, the system architecture illustrated in Fig. 3 does not show the proposed redundant server setup. It will however mainly consist of block (**C**) being duplicated a number of times as well as some added network monitoring and switching equipment. The duplicated central unit (**C**) can be positioned at different physical location so as to minimize the risk of system failure or brake down in case of for example power failure, fire etc..

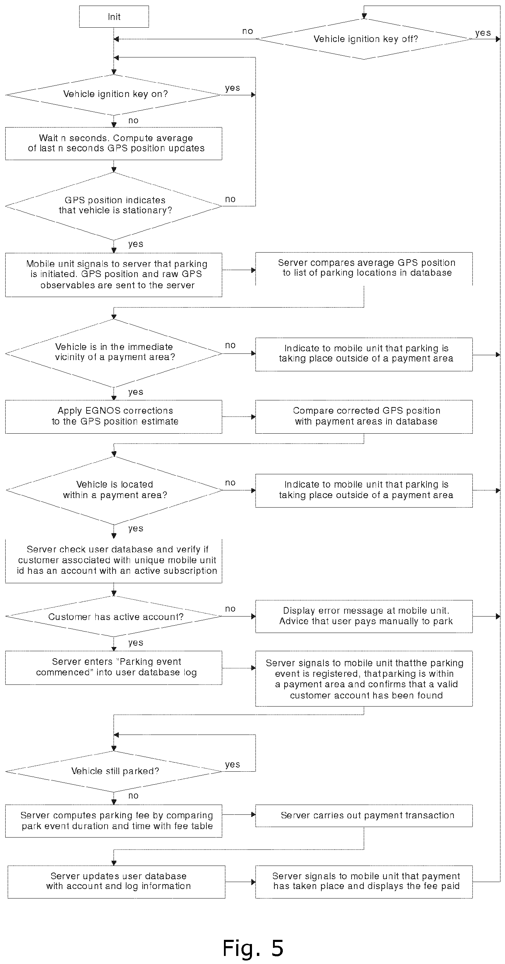

Fig. 5 illustrates the decision flow that takes place when a parking event occurs. When the system according to the present invention is initialized the server is idle and the client is busy waiting, polling the state of the vehicle ignition key. It will remain doing so until the ignition key is switched off.

When the vehicle ignition key is switched off, the client main system software simply waits a specified period of time, say for instance 5 seconds, collecting GPS position updates during this waiting period. After the waiting period the client system software computes the best average of the position updates and evaluates this to determine if the vehicle is moving or stationary. If it is moving, if for instance the vehicle is towed or otherwise being transported, and thus not parked, the client returns to its initial busy waiting loop. If the vehicle is stationary and the "ignition key off" precondition was met the vehicle is defined as parked.

If the vehicle was found to be parked, the client signals to the central server that the user vehicle is parked. It transfers the time of the parking event and the unique identification number of the client product so that the server is aware of who should pay for the parking if it turns out to be in a toll location. The client also transfers the averaged vehicle position as well as a number of raw GPS observables to allow the server to perform post processing of some selected GPS data.

The server responds by initiating a control sequence that will take care of the appropriate server-side data processing for the remainder of this particular parking event. The primary task is to determine whether the vehicle is parking in - or in the vicinity of - a toll parking area. For practical reasons this check must initially be as simple as possible in order to quickly abort any further processing if the vehicle is not in or near any toll parking areas. This initial check is required since the number of reported tentative parking events from the sum of the clients may potentially be very large, numbering in the millions pr day. This is elaborated further in the following description of the central server software.

If the vehicle is found to be parked outside any known registered payment areas the client is notified that parking is taking place free of charge, or at least not found in the database, and the data processing sequence is simply aborted. If, on the other hand, it appears that the vehicle was parked in or near a payment area, a further check is made on the server. The raw GPS observables are used with the latest set of EGNOS corrections to obtain an augmented/enhanced position estimate with increased accuracy. This enhanced position estimate is used to thoroughly check if the vehicle is parked in a pay area.

Again, if it is found that the vehicle is parked outside a registered payment area it is indicated to the user that parking is taking place free of charge and the data processing is aborted. If it is determined that the vehicle indeed is parked within a pay area, the server proceeds to check if the user has a valid customer account with an active subscription. If this is not the case, if for instance the customers subscription is expired or the account has been overdrawn, the server will be unable to perform payment on behalf of the user so an error message is issued to the user informing him of this. This error message may be supplemented with advice to park in a nearby non-toll area or suggest him to pay manually for the parking event. Optionally it may be entered into the user database log on the server that the particular user had performed an unsuccessful parking event as well as the reason this was so. Again, this will terminate the data processing sequence since the system will not be able to perform the payment service for the customer.

If the customer is found to have an active account with a valid subscription the server makes a log entry with the parking event (location, time and user id, etc.) so that it will be able to determine the duration of the parking event when it is terminated, i.e. the user moves the vehicle.

The server signals to the client that the parking event is registered, that it is taking place within a toll area and confirms that the customer has a valid account with an active subscription. This confirms to the user that payment will occur so the user knows he can safely leave the vehicle without fear of being incorrectly fined for parking without paying. Additionally it may inform the user what the current parking fee pr. time unit is at the present location (perhaps even including additional rates if the parking area operates with multiple rates as function of time). Naturally, it is also signalled on a display that is visible from outside of the vehicle so any parking attendant that checks the vehicle is informed that the owner of the vehicle will indeed pay for parking through an approved means of automatic payment.

This ends the 'first half' of the data processing control sequence, the server suspends the thread that takes care of the particular customer id until further notice and the client is left busy waiting, polling the state of the ignition key of the vehicle (which it would continue to do until the ignition is turned on).

When the user starts his vehicle the same procedure is used at the client to determine whether the vehicle is still parked as when the system originally left the initialization state. The client software waits for a period of time, collecting GPS position updates. When a significant amount of GPS data suggests that the vehicle is no longer parked, the server is contacted and the client signals that the parking event with the associated product id is terminated.

The server responds by reactivating the suspended thread taking care of this particular product id, resuming the control sequence thus finalizing the data processing. The server software computes the duration of the parking event and calculates the total parking fee, taking into account that the parking event may have spanned multiple time zones with different parking fees. The server executes the payment transaction, using an internet based payment gateway, transferring the appropriate amount from the customers account to the proprietor of the toll parking area that was used. Alternative, amounts relating to a number of parking events within a given time period, for example a month, can be accumulated in the served. The server then executes a single payment transaction once a month for a given costumer account.

The server updates the user log with the activities carried out to enable subsequent statistical analysis of the user database to monitor (and optimize) the operation of the system. The server signals to the client that the payment transaction has taken place, displays the fee transferred and optionally displays the customers account status information. This concludes the data processing sequence for the parking event, the server closes the thread for the particular product id and the client is left busy waiting, polling the state of the vehicle ignition key again.

Everything should occur during the least amount of time that is practically possible. The user should have near-instantaneous feedback and not have to wait for lengthy durations of time for system responses. It would be desirable to have the system respond and confirm to the user within 10 seconds from the ignition key being switched off that parking is correctly registered. Likewise it would be desirable to have the system respond within 10 seconds from the ignition being switched on (and the vehicle moved) that the payment transaction has occurred and what the total amount that was transferred was.

The following is a description of the primary functions, requirement and design parameters, notes and considerations for the sub modules of the proposed system architecture depicted in Fig. 3:

### 1 Client GPS

### Function:

The GPS receiver may for example use the GPS L1 C/A code signal @ 1575.42 MHz. As an alternative, perhaps for future system generations, other satellite based navigation systems, such as Galileo, would also be viable. The receiver will use a low profile patch antenna for practical installation purposes. It performs continuous tracking of the visible GPS satellite signals (up to a maximum of 12 satellites simultaneously) and computes m position estimate updates pr second (for instance 5 pr second). Position updates are passed to the mobile unit main computer software. The GPS receiver itself does not perform evaluation of whether GPS positions indicate a stationary or moving vehicle.

### Requirements:

The GPS module is cost sensitive since it is located in the mobile unit. This makes it a severe challenge to find commercially off-the-shelf (COTS) GPS modules that are applicable.

The primary requirement for the GPS module is to provide sufficiently accurate position estimates to maintain proper system operation. It is desirable to obtain an accuracy of less than 1.0 m independent of the mobile units local environment and reception conditions. This requirement is coupled to the size of a "standard" parking booth and the size of the vehicles that are expected to employ the system and method according to the present invention. The accuracy of the GPS receiver is expected to be vital to ensure that the product can be approved legally as valid means of payment for parking.

It is highly unlikely that a standard GPS L1 C/A code stand-alone receiver will be able to meet this requirement. Even relatively high quality single frequency stand-alone GPS modules that are orders of magnitude too expensive to have any relevance for the implementation of the present invention are not likely to meet the requirement. Therefore augmentation of some kind is definitely required. Early EGNOS tests made with ESTB (EGNOS System Test Bed) indicated that a GPS L1 C/A code receiver could be modified to provide position estimates with an accuracy of about 0.8 m when employing the corrections provided by the EGNOS augmentation system. Results such as these were obtained in signal reception conditions where the environment offered a virtually multipath free signal scenario. Multipath interference is caused when the GPS signals bounce of nearby objects causing the satellite signal to arrive at the antenna through routes other than the direct line of sight. This causes a detrimental effect on the GPS receiver signal processing and deteriorates the performance of the receiver. While typical commercially available low cost GPS L1 C/A code stand-alone modules tend to have an accuracy in the 3-10 m range in optimum conditions (multipath free environments), multipath interference may lower positioning performance to the 5-20 m range.

To achieve a 1.0 m (or better) accuracy in urban environments, where multipath interference is to be expected due to surrounding buildings, the GPS receiver must employ efficient means of suppressing the effect of multipath as well as employing EGNOS corrections. Currently multipath in satellite based navigation systems constitutes a major research area that include a great number of challenges. As of now there has not been established a simple, universal, well defined way of totally removing the effect of multipath. However a number of methods have been proposed by the research community, each with varying degree of effectiveness. It is established that multipath mitigation will require digital signal processing and that certain components of the GPS receiver has to support this - in particular the RF radio front end must have a relatively wide bandwidth of at least around 12-15 MHz for the signal processing to be effective.

The requirement that the desirable accuracy should also be reached in urban environments influences the way the EGNOS corrections are obtained. It is highly unlikely that surrounding buildings will permit a clear view to the EGNOS satellites in general in urban environments (this is elaborated further in the "10 GPS/EGNOS" section below). It is therefore proposed that EGNOS corrections are obtained centrally rather than having the clients themselves try to receive the EGNOS signals.

This leaves the system architecture choice of whether to (1) disseminate the EGNOS augmentation data from the server to all the clients or to (2) gather the appropriate 'raw' GPS observables from the clients and transfer these to the server and apply the augmentation data centrally. It appears option number two is advantageous since it is likely to limit the amount of data that has to be transferred to/from the clients through the wireless connections. As a rough overview of the amount of data to be transferred in each case (just the GPS positioning data is considered here, not the overhead to communicate client id, system status, handshakes, etc.) can be compared. A complete set of EGNOS corrections from the three EGNOS satellites consists of three sets of 17 messages which each consists of 33 bytes, thus totalling 3x17x33 = 1683 bytes. A set of raw observables consisting of 12 pseudoranges (assumed packed into 4 byte representations) occupy only 12x4 = 48 bytes though a few other parameters such as a receiver time stamp should also be transferred.

Exploiting this gives rise to an additional requirement for the GPS receiver at the client: It must be able to supply the raw GPS observables (pseudoranges) to the central server.

Some secondary requirements: The power consumption or the physical size of the receiver is not too critical. It is expected that these requirements will easily be met. However the antenna should be physically located so that it has the best possible 'clear' unobstructed view of the sky. It is acknowledged that car manufacturers are very likely to want to have the final say in matters such as physical arrangement and placing of the antenna if the product is to be factory installed in cars.

Overall the client GPS receiver is a critical component, both regarding the attainable performance and with respect to the unit cost price of the modules. The presented system is likely to require a custom made GPS module tailored to match the requirements of the application

### 2 GSM Modem

### Function:

The primary purpose of the GSM modem is to allow GPRS data packets to be sent to/from the mobile unit, thus providing internet connectivity. Also, other mobile phone systems, such as the various 3G systems, may be viable as well. As a side effect of employing a GSM modem in the mobile unit, a partially available embedded microprocessor is provided as well. Due to cost issues it is highly desirable not to have to implement a separate microprocessor to handle the decision making system software in the mobile unit, so this task could be implemented in software directly on the GSM modem.

### Requirements:

The amounts of data to be transferred during normal client-server communication are expected to be quite limited, perhaps to as little as a few hundred bytes pr parking event. This is of course influenced if value added services are attached to the core service. It may in fact be possible to implement this communication through SMS (Short Message Service) traffic. It is expected that GPRS traffic on the other hand will operate with sufficiently low latency to suit the requirements dictated by the overall operation of the system. With realistic GPRS data transfer rates around 30-80 kbit/s transfer durations should not pose a problem.

Thus, any modern GSM modem should be sufficient to handle the data transfers in an adequate fashion. Voice transfer is not required so a great number of commercially available GSM modems will be overkill for the current application. The GSM modem is cost sensitive since it is located in the mobile unit. It may prove to be a challenge to find sufficiently cheap modules - especially COTS (such as the Siemens cellular engine MC35i or equivalent) - so a cheap, stripped down version of an existing GSM modem design, custom made for this application could be required.

### 3 Main Computer Software

### Function:

The primary purposes of the client system software are to monitor the stream of GPS position updates to determine if the vehicle is stationary whenever the ignition key has been turned off and again when it has been turned on, and to initiate and handle communication with the server when the vehicle is found to be parked - or when it is terminating a parking event.

### Requirements:

The key to ensure reliable and proper operation of the system is the ability to determine whether the vehicle is parked or not (and where) in a robust, trustworthy manner. This requires high accuracy position estimates and the proper evaluation and decision logic. It is proposed that the evaluation is based on a number of position updates, such as for instance the last 25 updates which would correspond to 5 seconds worth of data if the GPS module was configured to provide 5 updates pr second. The client software performs a statistical hypothesis test based on some defined confidence level to determine if there is sufficient statistically significant data suggesting that the vehicle is stationary, and thus parked. Such a procedure would ensure a well defined behaviour with a fixed and known low probability of 'false positives' i.e. cases where the vehicle is assessed to be parked even though it is not assuming the GPS module operates as taken for granted in the statistics. Features such as outlier rejection should be considered as well. If external sensors, such as accelerometers, etc., are employed, measurements from these should be correlated with the GPS position updates as well.

Notes on errors in statistical hypothesis testing:
- False positive (type I error) - assessing a vehicle to be parked when it is really not.
- False negative (type II error) - failing to assess a vehicle as parked even though it really is.

If a false negative occur, a parked vehicle is not charged a fee for parking. This of course is not desirable since the proprietor of the parking area lose out on the parking fee he was entitled to. Though undesirable, the consequence of this is small if the error happens rarely. The system should be tuned to an appropriately low rate of false negatives, since a missed customer parking event could potentially cost the owner of the vehicle a parking fine which by all rights, the operator is likely to hear about and be asked to reimburse.

A false positive on the other hand would mean that a vehicle was falsely assessed to be parked and that the owner is potentially wrongfully charged for a parking that he did not perform. Such errors could cause the user to lose confidence in the product and should certainly be avoided.

The remaining functions are; to signal to the server whenever a parking event is taking place, sending raw GPS observables to the server and awaiting evaluation of whether the parking event is taking place within a pay zone, provide visible indication to both the parking attendant (externally visible display) and the user whether parking is taking place within a pay zone and whether the server has found a valid account to pay for the parking - conversely display an error message if the latter is not the case, signalling to the server when a parking event is terminated and displaying parking rates and total fees when so informed by the server. These are all very simple tasks that should not pose any problems.

This embedded client software must co-exist with the software that is executed on the GSM modem. It should be coded for maximum efficiency to ensure minimal resource consumption and smallest possible footprint (memory requirements) but this should not be a problem since the functions of the client are really quite simple.

Although the client system software performs a vital role, the same is true for the remainder of the system modules. With regards to performance only the process of robustly assessing whether the vehicle is parked or not requires special attention.

### 4 Mobile Network Operator

### Function:

The sole function of the mobile network operator is to provide network coverage for the area of operation. This is a well established standard service that is already offered, so this is deemed unlikely to cause complications.

### Requirements:

Care should be taken in finding the best subscription types (which would probably just be the cheapest service that has sufficient guarantee that GPRS traffic will indeed reach its destination) and the MNOs that have these available. Since it is probably unlikely that any single operator will have coverage for the desired region of operation, roaming agreements should be made to reach the appropriate network coverage.

### 5 Internet Service Provider

### Function:

Again, the sole function of the internet service provider is to facilitate the clients access to the internet for the area of operation.

### Requirements:

The GPRS packets should simply be routed to/from internet through stable routing nodes that have reliable operation and high uptime, which is expected to be a trivial task for any well established ISP.

### 6 Central Server Software

### Function:

The primary tasks of the central server system software are to receive transmissions from the mobile units, process the supplied information and initiate the proper action on the server based on the data from the mobile unit and the state of the corresponding users account as well as signal appropriate messages back to the mobile unit.

Primary actions on the server include initiating database information extractions, performing EGNOS correction of supplied GPS positions and corresponding raw observables, performing a two-step verification of whether the mobile unit is located in payment areas, performing customer account verifications, computing parking fees, performing the payment transactions, updating the user log with statistics, and making sure that the EGNOS database is continuously updated from two independent sources. Also the server should provide functions for updating the P-area database, updating the User database and perform statistical analysis on the information in the user log.

### Requirements:

The application software should be implemented in a flexible, scalable way to accommodate a large fleet of distributed clients. Whereas the embedded client software is optimized for minimum footprint to run on a low resource platform, the server-side software can exploit the computational power of large commercially available computers without any significant increase in overall system cost. Still a very large number of requests could potentially occur simultaneously so the software should be designed and implemented with strict performance optimization. This will affect both the application software architecture and the underlying databases.

An obvious choice of platform could be a distributed, redundant Linux server park running cheap (or free) operating systems with cheap (or free) databases. The application software could be multi-threaded for scalability and the databases should be structured to allow a large number of simultaneous requests.

As a consequence of the system architecture and the information and decision flow in the system, whenever a vehicle equipped with the client product has the ignition key switched off and the vehicle is stationary, this event (a tentative parking event) will 'trigger' that the server is contacted with information (GPS info, etc.) from the client. Thus, it is to be expected, that once the system is deployed in a widespread fashion, a very large number of requests will be sent to the server every day - even for cars that were not parked in pay areas and thus do not need any servicing.

It would be prudent to effectively reduce the processing load on the server by quickly filtering out such requests that do not require any servicing, thus a fast 'initial' geographic search procedure is needed to determine whether a parked vehicle is close to or within a pay zone. This is not necessarily a trivial task due to the potentially complex geographical layouts ('shapes') of the toll parking areas and the sheer number of parking areas that may be registered in the system. A simple and very efficient rough-sort evaluation scheme, based on circular approximations to parking areas is proposed to perform this initial check.

Assume that a parking area is surveyed and the location of all outer points of the area are measured so that the (linear) boundaries between points define the physical extent of the closed area. Simple shaped areas could be defined by three or four points, while complex shaped areas could require any number of points. All parking areas are entered into the database in their 'entire form' with all registered boundary point as well as circular approximations of the parking area mapped onto a tangential plane (2D) of the region, thus reduced to only two parameters (1) the geographic mean of all boundary points, and (2) the distance from the center to the point that lies furthest from the center.

This would allow a quick evaluation of whether a vehicle is in - or in the immediate vicinity of - a registered parking area based on the simple relation between planar distance of two points (the mean parking area 'center' location and parked vehicle location) and compare the radius of the circular parking area approximation to the distance between the two points. If the distance between the two points is less than the circle radius, the vehicle is defined as in or near the parking area.

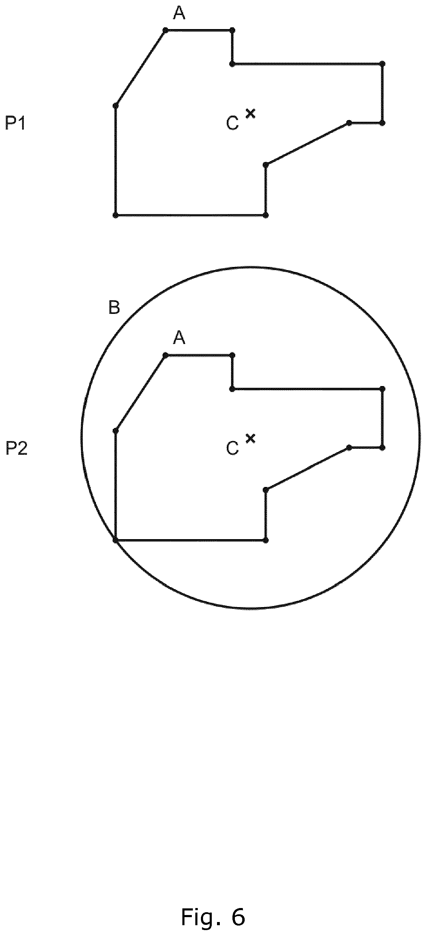

Referring now to Fig. 6 P1 is an example of a somewhat complex shaped parking area. The polygon A defines the outer boundaries of the parking lot in its entire form. The cross C marks the 'center' (geographic mean) of the parking lot, found by averaging the x and y coordinates respectively for points which constitute polygon A. P2 shows the same parking area as in P1 as well as the circular approximation B, using the point C as center, and having a radius corresponding to the distance between the center and the point on polygon A that lies the furthest from the center.

Naturally, a thorough subsequent evaluation should be carried out to determine accurately if the vehicle is located inside the potentially complex shaped parking area if the initial evaluation turned out to be true. This could be based on partially dividing the complex areas into simple shapes (ultimately reduced to just triangles) or whatever method is deemed appropriate.

The tasks of performing database information extraction or entering new information into a database are rather simple since the databases are equipped with database managers that provide high level functions for interaction with the database. It is proposed that relational database models that follows a SQL (Structured Query Language) implementation are considered.

Utilizing the respective database managers it is a simple matter to extract the latest EGNOS augmentation data to correct at set of GPS observations, extracting customer account information to verify if a client request is associated with a valid service subscription or to extract information about geographical location and boundaries of parking areas since simple macro functions can be assembled to search (querying) the databases for the required information.

Likewise, it should pose no problem to apply the EGNOS augmentation data to the GPS observations since known algorithms exist for the purpose. When the duration of parking events are computed (by comparing start and end time stamps for the events) and information about the applicable parking rates for the given location is extracted from the database, it is a trivial task to compute the total fee for the parking event. And when the total fee for a parking event is found, the customers information is extracted from the database it is simple to perform the payment transactions to the parking area proprietors using the payment service providers.

Overall the server is a highly critical component. The system operation relies entirely on a functioning system server since the clients will be unable to provide any service without the server. This makes it an absolute necessity that the server is implemented as a redundant server park rather than a single unit, so a single point of failure is avoided. This entails duplicating system components (servers and databases) a number of times, making sure that they are actually independent and redundant (so for instance they are located at different physical locations) on every level so that client communications will be routed to the appropriate servers no matter what the server system state is.

The server(s) and the server software must be scalable to accommodate a large (and growing) number of distributed clients. This is practically achievable using multithreading software techniques and practices that are well established.

### 7 P-area Database

### Function:

The purpose of the parking area database is to verify whether a parked car is located within a payment area and to determine how much the fee is for a given parking in the area.

### Requirements:

Each individual parking area that is associated with a parking fee exists as a separate entry in the database. Each entry could possibly consist of a list of GPS coordinates forming the outer boundary of the parking area, its geometric average point, the maximum physical extent of the area in any direction from the average center point (as well as other parameters) to facilitate a very quick and easy check to see if mobile unit GPS coordinates lie within a particular parking area.

It is envisioned that any given parking area easily can be mapped using a geodetic GPS survey receiver strategically placed at the outer extremes of the parking area. The database entries should have a table of parking fees (as function of time) associated with it as well as the required information to perform payments to the proprietors of the parking areas. The accuracy of the parking area registration should at least be comparable to (or preferably better than) the target accuracy of the mobile unit GPS module.

There exists a number of free (or cheap) SQL databases of which a great deal could be used for the various database purposes in the proposed system. Two very obvious candidates are the MySQL and PostgreSQL databases. MySQL is available as free software under the GNU GPL (General Public License), but is also available under traditional proprietary licensing arrangements for cases where the intended use is incompatible with the GPL. PostgreSQL is released under a flexible BSD-style license (Berkeley Software Distribution).

Summarized simplistically, MySQL was built with speed as the primary feature, PostgreSQL was built with more robust features like triggers, but lacked the speed of MySQL. As both are maturing, they are moving towards the other. MySQL 5 adds triggers and stored procedures, while PostgreSQL is focused on improving performance.

MySQL is used by huge internet information archives, such as Wikipedia, who currently services more than 200 million queries and 1.2 million updates per day with peak loads of 11,000 queries pr second. There is currently more than 6 million instances of MySQL worldwide, so the free database has undergone substantial testing and debugging.

PostgreSQL may perhaps have an advantage over MySQL when it comes to ensuring atomic, consistent and isolated operations which makes it ideal for transactions. Atomic operations are composite operations carried out on the database as a seemingly single occurrence (so that part of the composite operation can not be executed without 'all' of the composite operation is carried out). PostgreSQL also supports in-built functions so complex high level user defined operations can be executed directly in the database manager.

The parking area database is probably best implemented with MySQL. The primary focus when implementing this database should be on accessibility and speed. A parking area database based on MySQL will easily handle the information amount required to cover all the parking areas that will be included even in major regions of operation.

### 8 EGNOS Database

### Function:

The purpose of the EGNOS database is simply to hold the EGNOS augmentation data used to correct the GPS position estimates.

### Requirements:

The database should constantly be updated to hold the most current EGNOS data messages. This is a very simple task using the SISNET and the EGNOS/GPS receiver as data sources.

The EGNOS messages themselves are rather compact - consisting (at the moment) only of 17 messages, each occupying 33 bytes, pr EGNOS satellite - so the size of the database will be very limited.

The EGNOS database is easily implemented with MySQL. The primary focus when implementing this database should be on accessibility and speed.

### 9 User Database

### Function:

The purpose of the user database is to hold all the user account and subscription information as well as a log of historic events.

### Requirements:

The database will contain vital user info (such as account and subscription info, current state of the users vehicle, temporary transaction data, logged info and user statistics, etc.) and will serve as the basis for performing payment transactions. It is critical that the database is kept consistent at all times so user information is never corrupted.

The user information database is probably best implemented with PostgreSQL. The primary focus of this database and the methods implemented to access the database should be on consistency since it is used for transactions.

### 10 GPS/EGNOS Receiver

### Function:

The purpose of the centrally located GPS/EGNOS receiver is to provide a source of EGNOS augmentation data.

### Requirements:

An EGNOS compliant GPS receiver under control of the operator should be located near the central server. The EGNOS satellites are placed in geostationary orbits (above the equator) to provide a wide coverage area. This means that when seen from Earth the satellites will have quite low elevation angles above the horizon when observed from high latitudes such as northern Europe (in Denmark for instance at 56° deg north the elevation angle to the highest EGNOS satellite is about 7.5° above the horizon). Therefore it is vital to place the antenna for this receiver at a high altitude point in unobstructed view of the EGNOS satellites (such as at the top of a tall building). It is also advised to use a high gain directional dish antenna to maximize receiver signal-to-noise ratio, particularly for the EGNOS data message demodulation process.

Augmentation systems such as EGNOS, that rely on satellite based corrections are generally referred to at SBAS (Satellite Based Augmentation System). EGNOS is an augmentation system that covers operation in the European and African region. Equivalent to this, the American region is covered by the WAAS (Wide Area Augmentation System) system and Japan and the eastern Asian region is covered by MSAS (Multi-Functional Satellite Augmentation System).

The three SBAS systems all adhere to the same signal specification, "RTCA MOPS DO 229C" (http://www.rtca.org/downloads/ListofAvailableDocsWEBAUG_2005.htm). The RTCA (Radio Technical Commission for Aeronautics), develops standards related to FAA (Federal Aviation Administration) which is an agency of the United States Department of Transportation with authority to regulate and oversee all aspects of civil aviation in the U.S.

The EGNOS/GPS receiver could be one of a number of commercially available suited receivers, as long as the receiver is capable of providing the raw EGNOS messages for the database. Alternatively, a modified version of the client GPS receiver could be used (i.e. EGNOS reception support has to be included in this version of the client receiver).

### 11 SISNET

### Function:

The purpose of the SISNET connection is to provide a redundant source of the EGNOS data.

### Requirements:

SISNET is available both as a free service and as a commercial service. The free service is provided 'as is' without any guarantees, the commercial service is provided with some access and availability guarantees. It is advised that the operator subscribe to the commercial service to ensure proper EGNOS data message reception.

Currently ESA uses a proprietary application-layer protocol called 'DS2DC', explained in detail in the 'SISNET User Interface Document' (available at http://esamultimedia.esa.int/docs/egnos/estb/Publications/SISNET/SISNET_UID_3_1.pdf)

Implementing the required software to connect to the SISNET data server and continuously downloading messages to update the EGNOS database is a rather straight forward task based on the protocol specification. It is expected to be non-critical to reach the desired performance.

### 12 Payment Service Provider

### Function:

The purpose of the payment service provider is to act as a payment gateway that facilitates financial transactions over the internet.

### Requirements:

Service providers such as the Danish PBS seems like obvious candidates. Care should be taken to survey the marked and compare service conditions of the potential candidates. Similar to the mobile network operator/internet service provider, a special deal should be made with the chosen payment service provider since potentially a very large number of transactions will be made on a daily basis (which should bring transaction cost pr occurrence down). It is expected to be non-critical to reach the desired performance.

The above-mentioned system description takes its origin in a position determining arrangement applying GPS/EGNOS. The following is a short description of how future technological developments may affect the above described system architecture and the features and functions provided by the system.

### 1 Client GPS

The European satellite navigation system Galileo is currently under development. It is generally expected that Galileo will outperform (or at least match) GPS as we know it today in all aspects. The Galileo project has been subjected to numerous significant delays and is not expected to have a fully deployed satellite constellation before perhaps the year 2010.

As a more or less direct response to this development, GPS is undergoing modernizations to provide users with better performing positioning signals. Currently the 'GPS IIR-M' satellites (modernized versions of the current block IIR satellites) are being deployed and detailed specifications have been drafted for the following generation, 'GPS IIF'. A completely revised generation of GPS, called 'GPS-III' is also undergoing initial analysis at the moment.

It is likely that future high performance satellite navigation receivers will be designed to take advantage of a combination of the available signals. It is however not clear at the moment if SBAS augmentation data such as those provided by EGNOS will be an integral part of the future navigation systems or whether these will still be provided by separate augmentation systems. It is clear that receivers that combine data from several systems will generally be more expensive than those based on single systems, particularly the number of carrier frequencies dictate this.

Systems that do not contain the EGNOS-style augmentation data as an integral part may still significantly benefit of the principle of collecting raw GPS observables (or equivalent satellite navigation signals in general) at the client and sending these to the server for subsequent SBAS augmentation and correction for higher positioning accuracy. Since GPS in its present form is likely to be around for a number of years to come it is highly unlikely that the principle of collecting and applying the augmentation corrections centrally will become obsolete any time soon.

### 2 GSM Modem

While GSM is considered a 2G (second generation) mobile phone system, GPRS is often described as a "2.5G" system. 3G systems are currently being deployed, but so far has only reached full coverage in Denmark in densely populated urban areas and cities and along certain highway segments. Deployment may have different status in other European countries.

The primary requirement of the wireless access technology used in the system is the coverage, since data transfer rates are easily sufficient in even 2.5G networks due to the quite limited amounts of data to be transferred in typical operation.

With present coverage, 3G is probably highly unsuitable for the proposed system. This may of course change once the coverage is more complete. Also, depending on the future features and services that are desired by the system, 3G/4G mobile phone networks may prove advantageous if the features/services require large and fast data transfers between the clients and the server.

### 3 Main Computer Software

The basic role of the system software in the client is unlikely to change in future versions of the system. The client application software may however be expanded to support any number of possible augmentations. For instance more advanced user input/output and/or display capabilities may readily be included if future desired features/services requires this. Any number of sensors and transducers may be included as well, for instance vehicle alarm sensors.

### 4 Mobile Network Operator

See item 2 above. The role of the mobile network operator is likely to remain largely unchanged as a result of employing future mobile system technologies. The single primary function will still be to provide wireless access coverage for the distributed clients in the area of operation.

### 5 Internet Service Provider

Like the network operator, the role of the internet service provider is likely to remain unchanged.

### 6 Central Server Software

Additional features/services in a future system may readily be implemented by adding the relevant data processing modules in the central server. The server architecture can easily be expanded with additional servers to provide the desired functions.

### 7 P-area Database

Additional databases may be included to facilitate new features or services such as a variety of different road pricing schemes. Any number of additional databases can be incorporated.

### 8 EGNOS Database

See item 1 above. Even though Galileo may include EGNOS-style augmentation data as an integral part, this database could still be highly relevant as long as GPS is utilized.

### 9 User Database

Likely to remain unchanged. System operation is likely to depend on a user account database.

### 10 GPS/EGNOS Receiver

See item 8 above.

### 11 SISNET

See item 8 above.

### 12 Payment Service Provider

The role of the payment service provider is likely to remain unchanged in future system versions. As long as automated payment is part of the provided service the system will depend on some form of payment gateway.

## Claims

1. A system for automatic payment of road taxes for vehicles, the system comprising
- a plurality of mobile units, each unit being adapted to be positioned in a vehicle, and
- a base unit being adapted to communicate with the plurality of mobile units,
wherein each mobile unit comprises a satellite-based navigation system receiver, and communication means for transmitting a plurality of position observables containing pseudoranges to the base unit, and
wherein the base unit comprises communication means for communicating with the plurality of mobile units, and processor means for processing said position observables so as to determine a first position of the vehicle in relation to pre-loaded road tax information stored in or accessible from the base unit,
**characterised in that** said processor means is furthermore adapted to calculate a corrected position of the vehicle in case the first position of the vehicle falls within a predetermined range from a road section where road taxes are to be paid, comparing the calculated corrected position of the vehicle with the pre-loaded road tax information stored in or accessible from the base unit and determining if the vehicle has entered a road section where road taxes are to be paid.

2. A system according to claim 1, wherein the satellite-based navigation system receiver comprises a GPS receiver or a GALILEO receiver.

3. A system according to claim 1 or 2, wherein the communication means of each of the plurality of mobile units is adapted to communicate via a cellular network, such as GSM, GPRS, EDGE, iDEN, D-AMPS; PDC, W-CDMA, CDMA2000 or TD-SCDMA.

4. A system according to any of claims 1-3, wherein the communication means of the base unit is adapted to communicate with the plurality of mobile units via an Internet Service Provider.

5. A system according to any of claims 1-4, wherein the base unit comprises one or more base units optionally positioned at different physical locations.

6. A system according to claim 5, wherein the base unit is implemented as a redundant unit comprising a number of essentially identical base units optionally positioned at different physical locations.

7. A system according to any of claims 1-6, wherein the base unit is operatively connected to a plurality of external service providers, such as a payment service provider, a redundant service providing position correction signals etc.

8. A method for automatic payment of road taxes for vehicles, the method comprising the steps of
- providing a mobile unit adapted to be positioned in a vehicle, the mobile unit providing a plurality of position observables containing pseudoranges per time unit,
- transmitting a number of position observables to a base unit, and
- processing, in said base unit, said transmitted position observables so as to determine a first position of the vehicle in relation to pre-loaded road tax information stored in or accessible from the base unit
**characterised in that** a corrected position of the vehicle is calculated in case the first position of the vehicle falls within a predetermined range from a road section where road taxes are to be paid, comparing the calculated corrected position of the vehicle with the pre-loaded road tax information stored in or accessible from the base unit and completing a financial transaction when it has been determined that the vehicle has entered a road section, where road taxes are to be paid.

9. A method according to claim 8, wherein the step of calculating a corrected position of the vehicle involves applying SBAS, EGNOS, WAAS or MSAS corrections to the first position of the vehicle, said first position of the vehicle being represented by at least one set of GPS observables or GPS coordinates.

10. A method according to any of claims 8-9, further comprising the step of completing a financial transaction, said financial transaction comprising the step of drawing an amount corresponding to a calculated road tax from an account of an individual registered as the owner of the mobile unit, and deposit this amount on an account of the road tax proprietor.

11. A method according to any of claims 8-9, further comprising the step of completing a financial transaction, said financial transaction comprising the step of registering an amount corresponding to a calculated road tax, and storing this registering amount to enable a later deposit of an amount corresponding to accumulated registered amounts, said deposit being to an account of the road tax proprietor.

12. A method according to any of claims 8-9, further comprising the step of completing a financial transaction, said financial transaction comprising the step of drawing an amount corresponding to a calculated road tax from a prepaid amount paid by an individual registered as the owner of the mobile unit.

## Patentansprüche

1. System zum automatischen Bezahlen von Straßenbenutzungsgebühren für Fahrzeuge, wobei das System Folgendes umfasst:
- mehrere mobile Einheiten, wobei jede Einheit dafür eingerichtet ist, in einem Fahrzeug angeordnet zu werden, und
- eine Basiseinheit, die dafür eingerichtet ist, mit den mehreren mobilen Einheiten zu kommunizieren,
wobei jede mobile Einheit einen Empfänger eines satellitengestützten Navigationssystems und Kommunikationsmittel zum Senden mehrerer Positionengrößen, die Pseudostrecken enthalten, zu der Basiseinheit umfasst, und
wobei die Basiseinheit ein Kommunikationsmittel zum Kommunizieren mit den mehreren mobilen Einheiten und ein Prozessormittel, um die Positionsgrößen derart zu verarbeiten, dass eine erste Position des Fahrzeugs im Verhältnis zu zuvor geladenen Straßenbenutzungsgebühreninformationen, die in der Basiseinheit gespeichert oder zugänglich sind, bestimmt wird, umfasst,
**dadurch gekennzeichnet, dass** das Prozessormittel des Weiteren dafür eingerichtet ist, eine korrigierte Position des Fahrzeugs zu berechnen, wenn die erste Position des Fahrzeugs in einen vorgegebenen Bereich eines Straßenabschnitts, in dem Straßengebühren zu bezahlen sind, fällt, und die berechnete korrigierte Position des Fahrzeugs mit den zuvor geladenen Straßenbenutzungsgebühreninformationen, die in der Basiseinheit gespeichert sind oder zugänglich sind, zu vergleichen und zu bestimmen, ob das Fahrzeug in einen Straßenabschnitt gelangt sind, in dem Straßenbenutzungsgebühren zu bezahlen sind.

2. System nach Anspruch 1, wobei der Empfänger des satellitengestützten Navigationssystems einen GPS-Empfänger oder einen GALILEO-Empfänger umfasst.

3. System nach Anspruch 1 oder 2, wobei das Kommunikationsmittel einer jeden der mehreren mobilen Einheiten dafür eingerichtet ist, über ein zellulares Netzwerk wie etwa GSM, GPRS, EDGE, iDEN, D-AMPS; PDC, W-CDMA, CDMA2000 oder TD-SCDMA zu kommunizieren.

4. System nach einem der Ansprüche 1 bis 3, wobei das Kommunikationsmittel der Basiseinheit dafür eingerichtet ist, über einen Internetdienstanbieter mit den mehreren mobilen Einheiten zu kommunizieren.

5. System nach einem der Ansprüche 1 bis 4, wobei die Basiseinheit eine oder mehrere Basiseinheiten umfasst, die optional an unterschiedlichen physischen Standorten angeordnet sind.

6. System nach Anspruch 5, wobei die Basiseinheit als redundante Einheit ausgeführt ist, die eine Anzahl von im Wesentlichen identischen Basiseinheiten umfasst, die optional an unterschiedlichen physischen Standorten angeordnet sind.

7. System nach einem der Ansprüche 1 bis 6, wobei die Basiseinheit funktionsfähig mit mehreren externen Dienstanbietern verbunden ist, wie beispielswiese einem Zahlungsdienstanbieter, einem redundanten Dienst, der Positionskorrektursignale bereitstellt, usw.

8. Verfahren zum automatischen Bezahlen von Straßenbenutzungsgebühren für Fahrzeuge, wobei das Verfahren die folgenden Schritte umfasst:
- Bereitstellen einer mobilen Einheit, die in einem Fahrzeug positioniert wird, wobei die mobile Einheit pro Zeiteinheit mehrere Positionsgrößen, die Pseudostrecken enthalten, bereitstellt;
- Senden einer Anzahl von Positionsgrößen an eine Basiseinheit; und
- derartiges Verarbeiten der gesendeten Positionsgrößen in der Basiseinheit, dass eine erste Position des Fahrzeugs im Verhältnis zu zuvor geladenen Straßenbenutzungsgebührinformationen, die in der Basiseinheit gespeichert oder zugänglich sind, bestimmt wird,
**dadurch gekennzeichnet, dass** eine korrigierte Position des Fahrzeugs berechnet wird, wenn die erste Position des Fahrzeugs in einen vorgegebenen Bereich eines Straßenabschnitts, in dem Straßengebühren zu bezahlen sind, fällt, die berechnete korrigierte Position des Fahrzeugs mit den zuvor geladenen Straßenbenutzungsgebührinformationen, die in der Basiseinheit gespeichert oder zugänglich sind, verglichen wird, und eine Finanztransaktion abgeschlossen wird, wenn bestimmt wurde, dass das Fahrzeug in einen Straßenabschnitt gelangt ist, in dem Straßengebühren zu bezahlen sind.

9. Verfahren nach Anspruch 8, wobei der Schritt des Berechnens einer korrigierten Position des Fahrzeugs das Anwenden von SBAS-, EGNOS-, WAAS- oder MSAS-Korrekturen auf die erste Position des Fahrzeugs beinhaltet, wobei die erste Position des Fahrzeugs durch mindestens einen Satz von GPS-Größen oder GPS-Koordinaten dargestellt wird.

10. Verfahren nach einem der Ansprüche 8 bis 9, ferner umfassend den Schritt des Abschließens einer Finanztransaktion, wobei die Finanztransaktion den Schritt des Abbuchens eines der berechneten Straßenbenutzungsgebühr entsprechenden Betrags von einem Konto einer als Eigentümer der mobilen Einheit registrierten Person und des Einzahlens dieses Betrags auf ein Konto des Straßenbenutzungsgebührbesitzers umfasst.

11. Verfahren nach einem der Ansprüche 8 bis 9, ferner umfassend den Schritt des Abschließens einer Finanztransaktion, wobei die Finanztransaktion den Schritt des Registrierens eines einer berechneten Straßenbenutzungsgebühr entsprechenden Betrags und des Speicherns dieses registrierten Betrags, um eine spätere Einzahlung eines Betrags, der aufgelaufenen registrierten Beträgen entspricht, zu ermöglichen, wobei die Einzahlung auf ein Konto des Straßenbenutzungsgebührbesitzers erfolgt.

12. Verfahren nach einem der Ansprüche 8 bis 9, ferner umfassend den Schritt des Abschließens einer Finanztransaktion, wobei die Finanztransaktion den Schritt des Abbuchens eines der berechneten Straßenbenutzungsgebühr entsprechenden Betrags von einem vorausbezahlten Betrag, der durch eine als Eigentümer der mobilen Einheit registrierte Person bezahlt wurde, umfasst.

## Revendications

1. Système pour le paiement automatique de taxes routières pour des véhicules, le système comprenant :
- une pluralité d'unités mobiles, chaque unité étant adaptée pour être positionnée dans un véhicule, et
- une unité de base adaptée pour communiquer avec la pluralité d'unités mobiles,
dans lequel chaque unité mobile comprend un récepteur de système de navigation à base de satellite, et un moyen de communication pour la transmission d'une pluralité d'observables de position contenant des pseudodistances à l'unité de base, et
dans lequel l'unité de base comprend un moyen de communication pour la communication avec la pluralité d'unités mobiles, et un moyen de processeur pour le traitement desdites observables de position, de manière à déterminer une première position du véhicule par rapport à des informations de taxes routières préchargées, stockées dans l'unité de base ou accessibles à partir de celle-ci,
**caractérisé en ce que** ledit moyen de processeur est en outre adapté pour calculer une position corrigée du véhicule dans le cas où la première position du véhicule tombe dans une plage prédéterminée à partir d'une section de route où des taxes routières sont exigibles, tout en comparant la position corrigée calculée du véhicule avec les informations de taxes routières préchargées stockées dans l'unité de base ou accessibles à partir de celle-ci, et en déterminant si le véhicule est entré dans une section de route où des taxes routières sont exigibles.

2. Système selon la revendication 1, dans lequel le récepteur de système de navigation à base de satellite comprend un récepteur GPS ou un récepteur GALILEO.

3. Système selon la revendication 1 ou 2, dans lequel le moyen de communication de chacune parmi la pluralité d'unités mobiles est adaptée pour communiquer par le biais d'un réseau cellulaire, tel qu'un réseau GSM, GPRS, EDGE, iDEN, D-AMPS ; PDC, W-CDMA, CDMA2000 ou TD-SCDMA.

4. Système selon l'une quelconque des revendications 1 à 3, dans lequel le moyen de communication de l'unité de base est adapté pour communiquer avec la pluralité d'unités mobiles par le biais d'un fournisseur de service Internet.

5. Système selon l'une quelconque des revendications 1 à 4, dans lequel l'unité de base comprend une ou plusieurs unités de base positionnées au choix à différents emplacements physiques.

6. Système selon la revendication 5, dans lequel l'unité de base est mise en oeuvre comme une unité redondante comprenant un nombre d'unités de base quasiment identiques positionnées à différents emplacements physiques.

7. Système selon l'une quelconque des revendications 1 à 6, dans lequel l'unité de base est fonctionnellement reliée à une pluralité de fournisseurs de service externes, tels qu'un fournisseur de service de paiement, un service redondant fournissant des signaux de correction de position, etc.

8. Procédé pour le paiement automatique de taxes routières pour des véhicules, le procédé comprenant les étapes suivantes :
- la mise à disposition d'une unité mobile adaptée pour être positionnée dans un véhicule, l'unité mobile fournissant une pluralité d'observables de position contenant des pseudodistance par unité de temps,
- la transmission d'un nombre d'observables de position à une unité de base, et
- le traitement, dans ladite unité de base, desdites observables de position transmises, de manière à déterminer une première position du véhicule par rapport à des informations de taxes routières préchargées stockées dans l'unité de base ou accessibles à partir de celle-ci,
**caractérisé en ce qu'**une position corrigée du véhicule est calculée dans le cas où la première position du véhicule tombe dans une plage prédéterminée à partir d'une section de route où des taxes routières sont exigibles, tout en comparant la position corrigée calculée du véhicule avec les informations de taxes routières préchargées stockées dans l'unité de base ou accessibles à partir de celle-ci, et en effectuant une transaction financière s'il a été déterminé que le véhicule est entré dans une section de route où des taxes routières sont exigibles.

9. Procédé selon la revendication 8, dans lequel l'étape de calcul d'une position corrigée du véhicule implique l'application de corrections SBAS, EGNOS, WAAS ou MSAS à la première position du véhicule, ladite première position du véhicule étant représentée par au moins un ensemble d'observables GPS ou de coordonnées GPS.

10. Procédé selon l'une quelconque des revendications 8 à 9, comprenant en outre l'étape d'exécution d'une transaction financière, ladite transaction financière comprenant l'étape de retrait d'un montant correspondant à une taxe routière calculée à partir d'un compte d'un individu enregistré comme propriétaire de l'unité mobile, et le dépôt de ce montant sur un compte du propriétaire des taxes routières.

11. Procédé selon l'une quelconque des revendications 8 à 9, comprenant en outre l'étape d'exécution d'une transaction financière, ladite transaction financière comprenant l'étape d'enregistrement d'un montant correspondant à une taxe routière calculée, et le stockage du montant enregistré pour permettre un dépôt ultérieur d'un montant correspondant à des montants enregistrés cumulés, ledit dépôt étant effectué sur un compte du propriétaire des taxes routières.

12. Procédé selon l'une quelconque des revendications 8 à 9, comprenant en outre l'étape d'exécution d'une transaction financière, ladite transaction financière comprenant l'étape de retrait d'un montant correspondant à une taxe routière calculée à partir d'un montant prépayé par un individu enregistré comme propriétaire de l'unité mobile.
